Europäisches Patentamt

European Patent Office

Office européen des brevets

(11) Publication number: **0 175 208**
**B1**

## (12) EUROPEAN PATENT SPECIFICATION

(45) Date of publication of patent specification: **13.07.88**

(51) Int. Cl.⁴: **B 65 G 47/08, B 65 B 35/40**

(21) Application number: **85111121.1**

(22) Date of filing: **03.09.85**

(54) A method and device for collecting commodities.

(30) Priority: **03.09.84 JP 185265/84**

(43) Date of publication of application:
**26.03.86 Bulletin 86/13**

(45) Publication of the grant of the patent:
**13.07.88 Bulletin 88/28**

(84) Designated Contracting States:
**BE CH DE FR GB IT LI NL SE**

(56) References cited:
**US-A-3 068 624**
**US-A-3 923 144**

(73) Proprietor: **AB TETRA PAK**
**Box 61**
**S-221 00 Lund (SE)**

(72) Inventor: **Takimoto, Hiroaki**
**1-1, Daigo-Nishioji-Cho**
**Fushimi-Ku Kyoto (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

EP 0 175 208 B1

## Description

The present invention relates to a method and a device for collecting a plurality of square or rectangular commodities such as square or rectangular cylindrical paper containers for milk and juice into a group.

In order to collect a plurality of square commodities into a group to pack or wrap them, a previously employed method consists in that the commodities conveyed by a conveyor are individually pushed out sideways by a pusher. However, this method is inefficient because only one commodity is handled by one operation of the pusher. Further, in the collecting and packing operation of the commodities, it is sometimes desired to change the packing pattern so that, for example, five commodities may form one set or two rows respectively including five may be formed. The prior art method can not fully satisfy this requirement.

As a device overcoming the above disadvantage, there has been proposed a device, e.g., as shown in European patent application No. 85 10 1134.6 (EP—A—0154174, prior art under Art 54(3) EPC) in which a tapered or stepped pusher is employed. The pusher is provided with contiguous steps, each having longitudinal and lateral sizes substantially equal to the length and width of a square or rectangular commodity. Commodity groups in which the commodities are longitudinally adjacent to each other to form rows are loaded into the pusher set by set, and the pusher is forwarded a length corresponding to one commodity after said each loading.

In the practical use of such a stepped pusher it has been found that when the pusher is forwarded, a corner of a commodity may catch or interfere with an adjacent commodity, so that a commodity among the many square commodities is crashed and/or the row is disordered, which interferes with the collecting operation. One cause for this may be the tolerances of the length and width of the commodities.

A method and device as described in the preamble parts of claims 1 and 2 has also been known from US—A—3 923 144. In this prior art device the steps of the pusher are broader than the width of the commodities, with the result, that the rows of commodities formed in front of the pusher are spaced from each other, so that the abovementioned problem can not occur. However, this prior art device has the disadvantage that the groups of commodities formed on the receiving surface are not contiguous, but consist of spaced rows, and a further pusher acting in the transverse direction is required to close the gaps and to form contiguous groups.

It is an object of the invention to provide a method and an apparatus of the aforementioned kind, where, even if the rows of commodities are in contact with each other, the risk of a corner of a commodity being hit by a diagonally opposed corner of a commodity in an adjacent row or of a stab of the pusher is substantially avoided.

The present invention provides a method and a device in which a plurality of square commodities are collected into one group by utilizing a pusher and in which the aforementioned difficulty is prevented. The method is characterized in that the commodity group is pushed out in such a condition that the mutually contacting surfaces of the longitudinally adjacent commodities in each row are shifted forwardly or rearwardly with respect to the contact surfaces of the longitudinally adjacent commodities in the adjacent row. The device is characterized by a stepwise tapered pusher on which steps having a longitudinal length shorter than the length of a commodity and a substantially same lateral length as the width of the square commodity are continuously formed, said pusher being disposed on an operation table provided at a side of a conveyor for conveying the commodities and being slidable in a longitudinal direction parallel to the conveyor.

As described above, the pusher is tapered and is provided with the continuous steps having enough size to accommodate the commodities, and the commodities are pushed out by the pusher in a configuration such that the contact surfaces of the longitudinally adjacent commodities in any one row are shifted forwardly or rearwardly with respect to the contact surfaces of the longitudinally adjacent commodities in the adjacent row. In this case, when the pusher operates, the corners of the commodities in adjacent rows have been necessarily shifted forwardly or rearwardly to each other, so that the side surfaces of the commodities in the row function as a sort of guide for corners of the commodities of the adjacent row which is being pushed out by the pusher.

By providing the tapered pusher with steps having their longitudinal length shorter than the length of the square commodities and substantially the same lateral length as the width of the square commodities any forward stroke of the pusher by a stroke length corresponding to the length of one commodity will have the effect that the commodities in adjacent rows are forwardly or rearwardly shifted and are pushed out in this shifted condition.

The accompanying drawings illustrate embodiment of the invention, wherein,

Figure 1 is a plan view illustrating a whole collecting device for commodities according to a first embodiment,

Figure 2 is a vertical view thereof,

Figure 3 is an enlarged plan view of only a pusher for collecting commodities,

Figures 4a—d are plan views illustrating the collecting conditions, in accordance with the processes, in which respectively two commodities transversely aligned at left and right with a space corresponding two commodities therebetween are divided and collected into groups,

Figure 5 is a vertical view corresponding to an elevation of Figure 4d,

Figure 6 is a vertical view of a pusher which is positioned under an operation table and operates from a position in Figure 5,

Figure 7 is an enlarged plan view illustrating an aligned condition of the collected commodities, and

Figure 8 is an enlarged plan view illustrating another embodiment of a pusher.

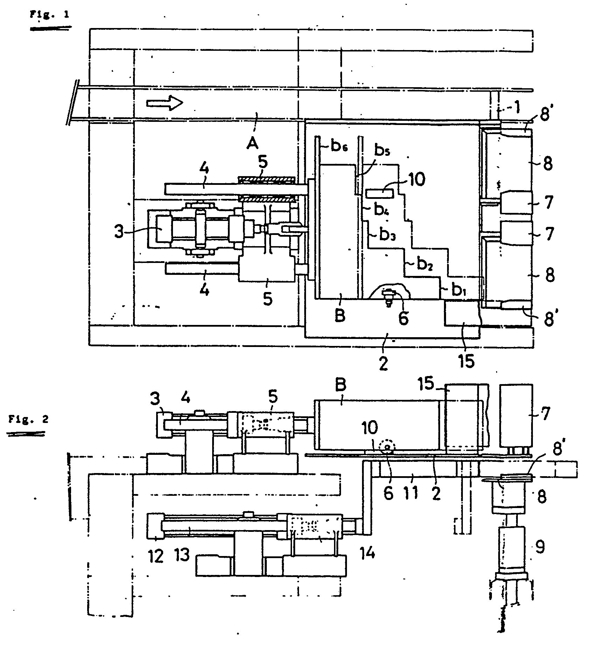

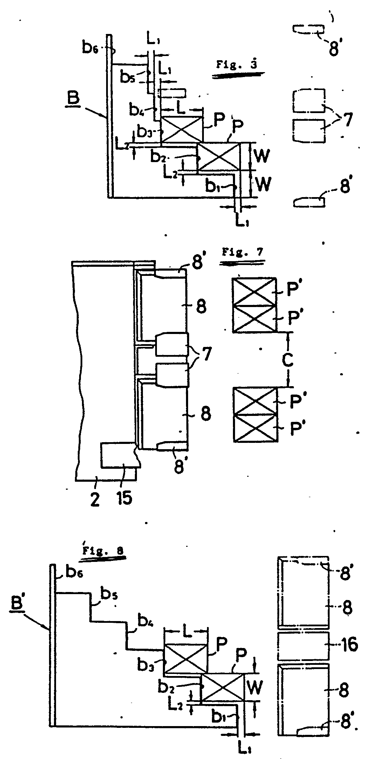

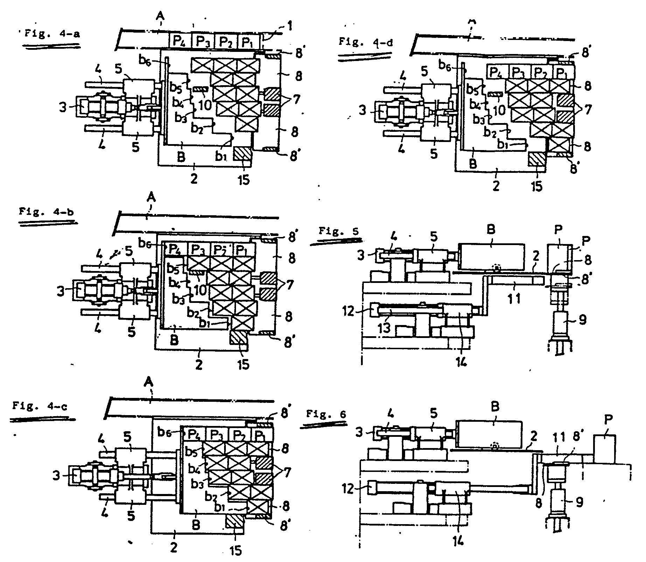

Figures 1 and 2 illustrate a device according to an embodiment of the invention designed to arrange two sets of two commodities which are laterally aligned at the left and right of a gap corresponding to the width of two commodities therebetween when the commodities are collected into groups.

Referring to Figure 1, A indicates a conveyor for conveying the commodities, which is always driven in a direction of the arrow. A stopper 1 is provided at the forward end of the conveyor A, so that the commodities successively delivered are stopped there.

A flat operation table 2 is provided at one side of the conveyor A. A pusher B driven by a cylinder 3 to slide parallel to the conveyor A is provided on the operation table 2.

The pusher B is, as illustrated in Figure 3 in detail, of stepwise tapered shape and is provided with continuous recesses or steps b1—b6 each of which has a smaller longitudinal size than a length L of the square or rectangular commodity P to be handled and has substantially the same lateral size as the width W of the commodity P. For example, in Figure 3, the steps b1, b2 and b3 have longitudinal lengths which are shorter by length L1 than the length L of the commodities P to be handled. The steps b4 and b5 are still shorter and have a longitudinal length equal to the length L1, respectively. While the width of the steps b2—b6 are same as the widths of the commodities P respectively, the width of the step b1 is shorter by a length L2 than the width W of the commodity P.

The pusher B is provided with two laterally spaced rods 4 and 4 extending rearwardly. Both rods 4 and 4 are adapted to slide in guide tubes 5 and 5 provided at the left and right sides of a cylinder 3, when the pusher b is operated by the cylinder 3. Further, rollers 6 adapted to roll on the operation table 2 are disposed under the lower surface of the pusher B. The rods 4 inserted into the tubes 5 and the rollers 6 under the pusher B enable the relatively large pusher B to slide smoothly without tieting.

Permanent stoppers 7 are disposed at the middle portion of the forward end of the operation table 2, i.e., in front of the steps b3 and b4 of the pusher B. Outwardly spaced from the two stoppers 7 are disposed two storage platforms 8 which are adapted to move vertically between a position at a same level as the operation table 2 and a position lower than that. The vertical movements of the left and right storage platforms 8 are performed by two individually disposed vertical cylinders 9. Vertical guide plates 8' are disposed at the outersides of the two storage platforms 8.

Further, a stopper 10 is fixed at a position shown in Figure 1 on the upper surface of the operation table 2. However, the height of the stopper 10 is so determined that the bottom of the pusher B may pass thereover without being impeded by the stopper 10.

On the other hand, as shown in Figure 2, pushers 11 which are operable to longitudinally move between the operation table 2 and the storage platforms 8 at the lowermost position are disposed and associated to the storage platforms 8, respectively. The right and left pushers 11 are adapted to be longitudinally (horizontally in Figure 2) moved by the cylinders 12 and 12 individually arranged at the left and the right. The pistons of the cylinders 12 are operable to be moved from a position shown by a solid line in Figure 2 to a position shown by the broken line. Each pusher 11 is, similarly to the pusher B, also provided with two left and right rods 13 which extend rearwardly and are adapted to slide in guide tubes 14 disposed at the left and the right of each cylinder 12 when the pusher 11 operates.

In the drawings the numeral 15 (in Figures 1, 2 and 4a—d indicates a stopper disposed at the side of the pusher B on the operation table 2 and downstream of the guide plate 8'. The pusher 15 is so arranged that the inside surface thereof may be positioned on substantially the same line as the outside surface of the pusher B (in the strict sense, slightly offset from the outside surface of the pusher B).

Now, a collecting operation by the device in Figure 1 will be described in detail.

Through one cycle of the process shown in Figures 4a—d, the device divides and collects the commodities into two groups each including laterally aligned two commodities with the two groups being separated by a space corresponding to two commodities. Before the device is actuated, as shown in Figure 4a, one commodity is preset in front of the second step b2 of the pusher, two are preset respectively in front of the third to fifth steps b3—b5, and three are preset in front of the last step b6. As stated above, the totally ten commodities are preset at appropriate positions except for the positions just in front of the steps b1—b6, and the end surfaces of the commodities at the left and may register with the left end surface of the pusher B. In this case, the commodities are not placed on the portions just in front of the stages b1—b6 to keep them vacant.

Since the longitudinal lengths of the steps b1—b6 in the pusher B are each shorter than the length L of the commodities to be handled, the commodities which are arranged at the portions in front of the stages b1—b6 with spaces respectively corresponding to one commodity are disposed in such a condition that the longitudinally contact surfaces thereof are shifted respectively by the length L1 with respect to the longitudinally contact surfaces of the commodities at the adjacent row. In other words, as shown in Figure 4a, the contact surfaces of the commodities in each longitudinal row are not laterally aligned with the contact surfaces of the commodities at the adjacent row, but are positioned beside the side surfaces of the commodities at the adjacent row.

The conveyor A is driven to convey the commodities at random. The commodity P1 at the forefront is intercepted by the stopper 1 provided at the end of the conveyor A, so that the succeeding three commodities P2—P4 are stopped to be adjacent to the rear of the commodity P1 at the side of the operation table 2.

In this instance, the commodities P1—P4 are pushed, as shown in Figure 4b, into the pusher B by a further pusher or the like (not shown), provided at the other side of the conveyor A and movable across conveyor A. By this operation the commodity P4 at the rear end is accommodated in the rear end step b6 and the commodities P3—P1 are longitudinally aligned in one row at the front thereof. Further, in accordance with the movement of the commodities P3—P1, the commodities which have been set in front of the pusher B are transversely or laterally moved one by one, so that the commodity at the right end in the first transverse row is accommodated in the forefront step b1 of the pusher B and the commodity at the right end in the second transverse row is accommodated in the second step b2. Thus, the commodities are respectively accommodated in the vacant portions of the steps.

Since the stopper 10 is arranged at the left of the step b4 of the pusher B, the commodities to not enter into the steps b3 and b4, as shown in Figure 4b.

The commodity pushed into the forfront step b1 is intercepted by the stopper 15, so that it is not transversely moved further and is stopped at the position just in front of the step b1.

On the other hand, the commodities P1—P3 among the newly added commodities P1—P4 are positioned just beside the commodities at the adjacent row which have been transversely moved to the position in front of the stage b5. In this position, the contact surfaces of longitudinally adjacent commodities in these two adjacent rows temporarily coincide with each other.

After this operation, the two storage platforms 8 at the left and the right are raised to the same level as the operation table 2 by the cylinder 9.

When the commodities P1—P4 have been fully pushed into the pusher B, as shown in Figure 4c, the pusher B is moved forward by the length L of one commodity, so that the commodities at the leading transverse row including the commodity P1 are pushed out onto the two storage platforms 8 at the left and the right which have been raised to the same level as the operation table 2. Since the two stoppers 7 at the left and the right are disposed between the storage platforms 8, the commodities in the leading row which are positioned on same lines as the stoppers 7 are intercepted by the stoppers 7 and are not pushed out. Therefore, as shown in Figure 4d, two commodities are collected on each storage platform 8 at the left and the right with the two stoppers 7 therebetween.

Although the contact surfaces of the commodities which are positioned in the second longitudinal row in front of the step b5 have been temporarily coinciding with the contact surfaces of the commodities in the first longitudinal row in front of the step b6, these surfaces are now shifted by the operation of the pusher B as shown in Figure 4c. When the pusher B is operated, other commodities in front of the pusher B are forwarded by a length corresponding to the length of one commodity while maintaining such a condition that the contact surfaces of the longitudinally adjacent commodities are offset forwardly or rearwardly in adjacent rows.

Therefore, the collecting operation can be performed without the risk that the corners of the commodities catch the adjacent commodities so that the commodities may be deformed or the rows become disordered.

In the above embodiment, the pusher B is so designed that the commodities in front of the steps after the first step are not closely fitted to the steps but transversely shifted by the length L2 in Figure 3. According to this structure the risk can also be avoided that the corners of the steps of the pusher B catch the commodities.

Since the guide plates 8' are vertically arranged outside the storage platforms 8, the two commodities pushed out from the steps b1, b2 or b5, b6 of the pusher B are smoothly pushed into a space between the guide plate 8' and the stopper 7.

As soon as the two commodities are collected on each storage platform 8, the cylinder 9 lowers the two storage platforms 8 to a position shown by broken line in Figure 5. Then, the cylinder 12 forwards the pusher 11 situated under the operation table 2 to a position shown by the solid line in Figure 6, so that the two commodities are pushed out from each storage platform 8.

Although the two commodities respectively placed at the left and the right on the storage platforms 8 have been shifted by said length L1 with respect to each other, the longitudinal positions thereof exactly coincide with each other as shown by P' in Figure 7 when they have been pushed out by the pusher 11 from the storage platform 8.

This operation is repeated to collect the two commodities two by two into groups divided and spaced with the two stoppers 7 therebetween.

The collecting number or the space (C in Figure 7) between the groups can easily be changed by appropriately changing the number of the steps of the pusher B, the number of the commodities pushed into it and the space between stoppers 7 and the guide plates 8'.

Figure 8 illustrates another embodiment of the pusher, which is different from the pusher shown in Figure 1 by being provided with contiguous steps having same longitudinal and transverse sizes except for the first step b1 which has a width smaller by L2 than those of the others. Each longitudinal length of the second to sixth stages b2—b6 is same as those of the second and third stages b2 and b3 of the pusher shown in Figure 1 and is shorter by L2 than the length L of the commodity. Each width of the stages b2—b6 is same as those of the second and third stages b2 and b3 of the pusher shown in Figure 1 and is same as the width of the commodity P. The foremost step has a width which is smaller by L2 than the width W of the commodity P similarly to the pusher shown in Figure 1.

The device can be so modified that the pusher B shown in Figure 1 is replaced by the pusher B' shown in Figure 8, the stoppers 7 are eliminated and the operation table 2 is enlarged so as to enable up to longitudinally six commodities to be accommodated in front of the step b6 of the pusher B'. When the collecting operation is performed by this device, the commodities can be collected into groups of six on the storage platforms 8, and on a further platform (indicated at 16 in Figure 8) therebetween.

When using the pusher B' shown in Figure 8 instead of using the pusher B shown in Figure 1, when the pusher is operated, the commodities in front of it are forwarded by a distance corresponding the one commodity while maintaining a condition in which the longitudinally contact surfaces are shifted forwardly or rearwardly in adjacent rows. Therefore, in this case, too, the corners of the commodities do not catch the adjacent commodities and thus the collecting operation is facilitated.

As stated hereinbefore, according to the method of the invention groups of commodities forming longitudinal rows of abutting commodities are loaded set by set into the tapered pusher on which steps having enough size to accommodate the square commodities are contiguously formed, and the pusher is forwarded by a length corresponding to one commodity in operation cycle. This avoids the risk that one or more commodities among the commodities in front of the pusher are deformed or the rows are disordered. Therefore, the collecting operation is improved. Further, according to the device of the invention, the collecting operation for the commodities can be performed automatically and efficiently.

## Claims

1. A method of collecting rectangular commodities (P) into groups by forming in front of a stepped pusher (B) an arrangement of adjacent longitudinal rows of contiguously arranged commodities and longitudinally reciprocating to the length (L) of one commodity (P) so as to push by each stroke the foremost commodities in at least part of the rows onto a receiving surface (8), characterized in that said pusher (B), when pushing forward said arrangement of commodities, brings it into a configuration in which the contact surfaces of abutting commodities in any row are shifted forwardly or rearwardly with respect to the contact surfaces of the abutting commodities in the adjacent row.

2. A device for carrying out the method of claim 1, comprising a conveyor (A), a stepped pusher (B) located on one side of said conveyor and reciprocatable in a longitudinal direction parallel to said conveyor on a table (2), and means to move commodities from said conveyor onto said table (2) to form rows of commodities in front of said pusher, characterized in that the steps (b1 to b6) of said pusher (B) have a length in said longitudinal direction which is smaller than the length (L) of the commodities (P) to be collected.

3. A device according to claim 2, characterized in that at least one stopper (7) is disposed on said table (2) in a position to intercept at least one of said rows of commodities to keep this row stationary during each stroke of the pusher (B) and in that said pusher has at least one short step $(b_4, b_5)$ in front of said at least one row intercepted by a stopper (7), each short step having a longitudinal length $(L_1)$ substantially shorter than the length (L) of the other steps $(b_1, b_2, b_3)$ of the pusher.

4. A device according to claim 3, characterized in that the length $(L_1)$ of a short step $(b_4, b_5)$ is equal to the difference $(L_1)$ between the length of the other steps and the length (L) of the commodities.

5. A device according to claim 2, characterized in that the width of the first step $(b_1)$ of the pusher (2) is smaller by a small amount $(L_2)$ than the width (W) of the commodities.

## Patentansprüche

1. Verfahren zum Sammeln von rechteckigen Waren (P) in Gruppen durch Ausbilden einer Anordnung von nebeneinanderliegenden Längsreihen zusammenhängend angeordneter Waren vor einem gestuften Stößel (B) und durch längs Hin- und Herbewegen um die Länge (L) einer Ware (P), um so bei jedem Hub die vorderste Ware in mindestens einem Teil der Reihen auf eine Aufnahmefläche (8) zu stoßen, dadurch gekennzeichnet, daß der Stößel (B) beim Vorstoßen der Anordnung von Waren diese in eine Gestalt bringt, in welcher Berührungsflächen aneinanderliegender Waren in jeder Reihe nach vorne oder hinten geschoben werden bezüglich der Berührungsflächen der aneinander anliegenden Waren der nebenliegenden Reihe.

2. Vorrichtung zum Durchführen des Verfahrens nach Anspruch 1, mit einem Förderer (A), einem gestuften Stößel (B), der an einer Seite des Förderers liegt und in Längsrichtung parallel zum Förderer auf einem Tisch (2) hin- und herbewegbar ist, und einer Vorrichtung zum Bewegen von Waren vom Förderer auf den Tisch (2), um Reihen von Waren vor dem Stößel zu bilden, dadurch gekennzeichnet, daß die Stufen (b1 bis b6) des Stößels (B) in Längsrichtung eine Länge haben, die geringer ist als die Länge (L) der zu sammelnden Waren (P).

3. Vorrichtung nach Anspruch 2, dadurch gekennzeichnet, daß mindestens ein Stopper (7) auf dem Tisch (2) in einer Stellung angeordnet ist, daß er mindestens eine Reihe der Waren absenkt, um diese Reihe während jedes Hubs des Stößels (B) stationär zu halten und dadurch, daß der Stößel mindestens eine kurze Stufe ($b_4$, $b_5$) vor dieser mindestens einen Reihe, die vom Stopper (7) abgefangen wird, aufweist, wobei jede kurze Stufe eine Längslänge ($L_1$) aufweist, die kürzer ist als die Länge (L) der anderen Stufen ($b_1$, $b_2$, $b_3$) des Stößels.

4. Vorrichtung nach Anspruch 3, dadurch gekennzeichnet, daß die Länge ($L_1$) der kurzen Stufe ($b_4$, $b_5$) gleich dem Unterschied ($L_1$) zwischen der Länge der anderen Stufen und der Länge (L) der Waren beträgt.

5. Vorrichtung nach Anspruch 2, dadurch gekennzeichnet, daß die Breite der ersten Stufe ($b_1$) des Stößels (2) um eine geringe Größe ($L_2$) schmaler ist als die Breite (W) der Waren.

**Revendications**

1. Procédé pour assembler des produits rectangulaires (P) en groupes en formant, devant un poussoir étagé (B), un arrangement de rangées longitudinales adjacentes de produits disposés de façon contigué et en exécutant un mouvement alternatif longitudinal sur la longueur (L) d'un produit (P) afin de pousser, à chaque course, les produits situés le plus en avant dans au moins une partie des rangées, jusque sur une surface de réception (8), caractérisé en ce que ledit poussoir (B), lorsqu'il pousse vers l'avant ledit arrangement de produits, l'amène dans une configuration dans laquelle les surfaces de contact de produits en butée dans une rangée quelconque sont décalées vers l'avant ou vers l'arrière par rapport aux surfaces de contact des produits en butée dans la rangée adjacente.

2. Dispositif pour la mise en oeuvre du procédé de la revendication 1, comprenant un transporteur (A), un poussoir étagé (B) placé sur un premier côté dudit transporteur et pouvant être animé d'un mouvement alternatif dans une direction longitudinale parallèle audit transporteur sur une table (2), et des moyens destinés à faire passer les produits dudit transporteur sur ladite table (2) pour former des rangées de produits en avant dudit poussoir, caractérisé en ce que les étages (b1 à b6) dudit poussoir (B) ont une longueur, dans ladite direction longitudinale, qui est inférieure à la longueur (L) des produits (P) à rassembler.

3. Dispositif selon la revendication 2, caractérisé en ce qu'au moins un butoir (7) est disposé sur ladite table (2) dans une position telle qu'il intercepte au moins l'une desdites rangées de produits pour maintenir cette rangée mobile durant chaque course du poussoir (B), et en ce que ledit poussoir comporte au moins un étage court ($b_4$, $b_5$) en face de la ou des rangées interceptées par un boutoir (7), chaque étage court ayant une longueur longitudinale ($L_1$) sensiblement plus courte que la longueur (L) des autres étages ($b_1$, $b_2$, $b_3$) du poussoir.

4. Dispositif selon la revendication 3, caractérisé en ce que la longueur ($L_1$) d'un étage court ($b_4$, $b_5$) est égale à la différence ($L_1$) entre la longueur des autres étages et la longueur (L) des produits.

5. Dispositif selon la revendication 2, caractérisé en ce que la largeur du premier étage ($b_1$) du poussoir (2) est inférieure d'une petite valeur ($L_2$) à la largeur (W) des produits.

**0 175 208**

Fig. 1

A
b₆ b₅
4 5 10
3 b₄
b₃
4 5 b₂
B b₁
6
2
2 15
8'
8
7
7
8
8'
1

Fig. 2

3 4 5 B 15
10 7
6 11 2 8'
12 13 14 8
9

1

**0 175 208**

Fig. 3

Fig. 7

Fig. 8

2

0 175 208

Fig. 4-a

Fig. 4-b

Fig. 4-c

Fig. 4-d

Fig. 5

Fig. 6

3